# EUROPÄISCHE PATENTSCHRIFT

(11) **EP 0 791 182 B1**
(45) Veröffentlichungstag und Bekanntmachung des Hinweises auf die Patenterteilung: **16.09.1998**
(21) Anmeldenummer: 95937838.1
(22) Anmeldetag: 25.10.1995
(51) Int. Cl.: G02B 23/12

(54) **VORRICHTUNG ZUR ZWANGSKOPPLUNG ZWEIER SICHTLINIEN**
DEVICE FOR THE FORCED COUPLING OF TWO LINES OF SIGHT
DISPOSITIF DE COUPLAGE FORCE DE DEUX LIGNES DE VISEE

(30) Priorität: 11.11.1994 DE 4440444
(43) Veröffentlichungstag der Anmeldung: 27.08.1997
(73) Patentinhaber: STN ATLAS Elektronik GmbH, 28309 Bremen (DE)
(72) Erfinder: ENNENGA, Luitjen, D-27798 Hude (DE); LIPINSKI, Ulrich, D-27777 Ganderkesee (DE); DUVENECK, Uwe, D-27755 Delmenhorst (DE)
(86) Internationale Anmeldenummer: EP9504173
(87) Internationale Veröffentlichungsnummer: WO9615469

(56) Entgegenhaltungen:
- EP-A- 0 201 003
- DE-A- 2 746 076
- DE-A- 2 749 515
- DE-A- 3 601 763
- FR-A- 2 552 893
- FR-A- 2 687 791
- US-A- 3 446 980

## Beschreibung

Die Erfindung betrifft eine Vorrichtung zur Zwangskopplung zweier Sichtlinien in der Weise, daß die Sichtlinie eines optischen Zusatzsystems der sich bewegenden Sichtlinie eines optischen Hauptsystems in fest vorgegebener Zuordnung nachgeführt wird, wobei die Sichtlinie des Hauptsystems über einen in Azimut und Elevation steuerbaren, insbesondere stabilisierten Ausblick-Hauptspiegel geführt ist.

Einige militärische Raketensysteme verwenden ein optisches Tagsichtsystem, wie ein Teleskop oder eine Periskop mit Fadenkreuz, das manuell auf ein Ziel gerichtet ist. Die Abschußvorrichtungen (Launcher) für die Raketen oder Flugkörper (Missiles) sind mit dem Sichtsystem gekoppelt, so daß die Flugkörper auf das Ziel ausgerichtet sind und das im Fadenkreuz anvisierte Ziel treffen (US 3 446 980 A).

Bei einigen Raketensystemen wird über das Sichtsystem noch ein Laserstrahl geführt, mittels dem der abgeschossene Flugkörper in das anvisierte Ziel gelenkt wird.

Zur Nachttauglichkeit solcher Raketensysteme ist es erforderlich, zusätzlich ein optisches Nachtsichtgerät, wie Wärmebildgerät oder Infrarot-Kamera zu installieren, mit dem auch nachts ein Ziel aufgefaßt, verfolgt und bekämpft werden kann. Dabei ist es aus verschiedenen Gründen nicht möglich, auch den Infrarotstrahlengang über den Ausblickspiegel des Tagsichtsystems zu führen, so daß für das Nachtsystem ein gesonderter optischer Strahlengang mit gesonderter optischer Achse oder Sichtlinie vorgesehen wird. Dabei ist es wünschenswert, die Sichtlinie des zusätzlichen Nachtsichtsystems und die Sichtlinie des Tagsichtsystems miteinander zu synchronisieren, um die Bedieneinheit des Tagsichtsystems und dessen Kopplung mit den Abschußvorrichtungen auch für das Nachtsystem verfügbar zu machen.

Aus der genannten US 3 446 980 A ist bereits die Verwendung von Autokollimatoren in optischen Sichtsystemen von auf Fahrzeugen installierten Raketensystemen bekannt, die zur Stabilisierung der optischen Achse oder Sichtlinie des Sichtsystems verwendet werden. Hierbei wird der vom Autokollimator ausgesendete Lichtstrahl mittels Kreisel raumstabilisiert und auf die Rückseite des Ausblickspiegels fokussiert. Dort wird der Lichtstrahl auf einen Kollimatorspiegel umgelenkt. Der am Kollimatorspiegel in sich reflektierte Lichtstrahl wird über den Ausblickspiegel ins Zentrum eines lichtempfindlichen Detektors zurückgeworfen. Wenn die Orientierung des stabilisierten Lichtstrahls sich ändert, verschiebt sich der reflektierte Lichtstrahl aus dem Detektorzentrum, und der Detektor generiert ein Fehlersignal. Dieses Fehlersignal steuert Spiegelantriebe für die Verstellung des Ausblickspiegels in Azimut und Elevation in der Weise, daß der am Kollimatorspiegel reflektierte Lichtstrahl wieder in das Detektorzentrum zurückkehrt, dessen Fehlersignal also wieder zu "Null" wird. Bei diesen Raketensystemen ist ein Zusatzsystem für Nachtsichttauglichkeit mit einer zweiten optischen Achse oder Sichtlinie nicht vorgesehen.

Der Erfindung liegt die Aufgabe zugrunde, eine Vorrichtung zur Zwangskopplung zweier Sichtlinien, wie die Ausblickachse eines Tagsichtsystems und die Ausblickachse eines Nachtsichtsystems, zu schaffen, die eine fertigungstechnisch einfache Nachrüstung eines bestehenden optischen Hauptsystems (wie ein Tagsichtsystem) mit einem optischen Zusatzsystem (wie Nachtsichtsystem) mit minimalem technischen und wirtschaftlichen Aufwand ermöglicht und darüber hinaus eine hochgenaue Synchronisation der beiden Sichtlinien sicherstellt.

Die Aufgabe ist bei einer Vorrichtung der im Oberbegriff des Anspruchs 1 definierten Gattung erfindungsgemäß durch die Merkmale im Kennzeichenteil des Anspruchs 1 gelöst.

Die erfindungsgemäße optische Erfassung der Position des Ausblick-Hauptspiegels und die elektronische Synchronisation der Sichtlinie des Zusatzsystems mit der Position des Hauptspiegels und damit der Lage der Sichtlinie des Hauptsystems erlaubt es, das Zusatzsystem an das Hauptsystem anzukoppeln, ohne mechanische oder konstruktive Eingriffe in dem Hauptsystem vornehmen zu müssen. Die Zugänglichkeit besonderer Schnittstellen am Hauptsystem ist für die Integration des Zusatzsystems nicht erforderlich. Jedes bestehende Hauptsystem läßt sich somit mit einem Zusatzsystem problemlos nachrüsten.

Zweckmäßige Ausführungsformen der erfindungsgemäßen Vorrichtung mit vorteilhaften Weiterbildungen und Ausgestaltungen der Erfindung ergeben sich aus den weiteren Ansprüchen.

Gemäß alternativen Ausführungsformen der Erfindung sind dabei entweder alle optischen und elektronischen Bauelemente des Zusatzsystems in einen Zusatzkopf relativ zu diesem feststehend angeordnet und der Zusatzkopf und der schwenkbewegliche Positionssensor fest miteinander verbunden oder, wenn die Sichtlinie des Zusatzsystems über einen Zusatz-Ausblickspiegel geführt ist, ist nur der Zusatzspiegel starr mit dem in Elevation und Azimut verstellbaren Positionssensor verbunden.

In einer bevorzugten Ausführungsform der Erfindung wird der Positionssensor mit einem Autokollimator als Lichtsender und einem an sich bekannten Position Sensitive Sensor (PSS) einer CCD-Kamera bzw. CCD-Matrix oder einem Vierquadrantendetektor als Lichtdetektor realisiert.

Die Erfindung ist anhand von in der Zeichnung dargestellten Ausführungsbeispielen im folgenden näher beschrieben. Es zeigen in jeweils schematischer Darstellung:
- Fig. 1: ein optisches Tagsichtsystem und ein optisches Nachtsichtsystem sowie eine Vorrichtung zur Kopplung der Sichtlinien beider Sichtsysteme,
- Fig. 2: einen Positionssensor in der Kopplungsvorrichtung in Fig. 1,
- Fig. 3: eine gleiche Darstellung wie in Fig. 1 mit modifiziertem Nachtsichtsystem.

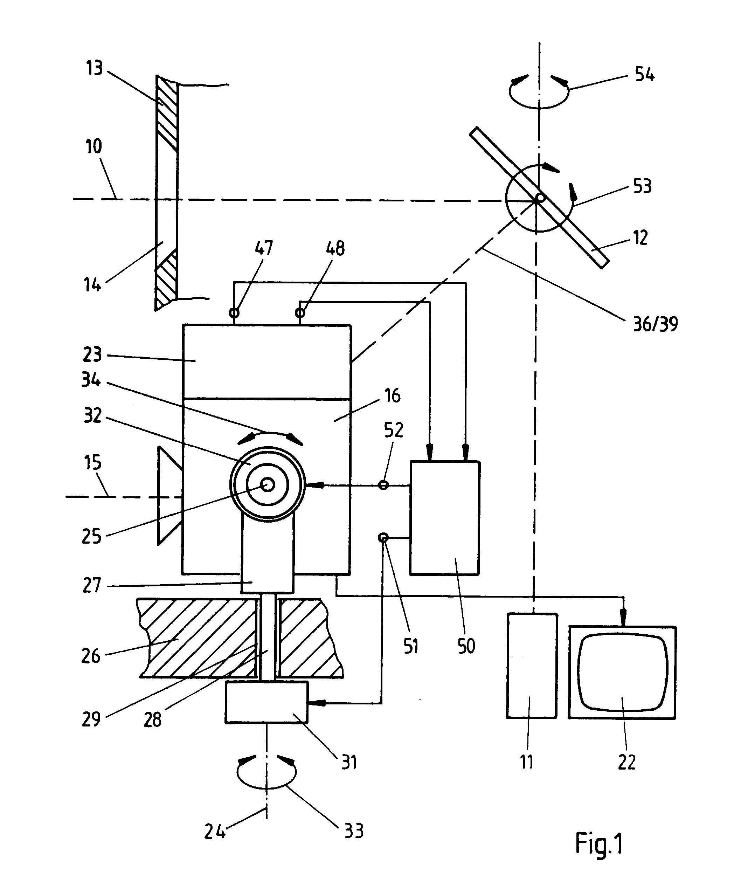

In Fig. 1 ist mit 10 die Sichtlinie oder Sichtlinie eines Tagsichtsystems bezeichnet, wie es zum Beispiel durch ein Teleskop 11 realisiert ist. Die Sichtlinie 10 ist dabei über einen Ausblick-Hauptspiegel 12 geführt, der in einem mit 13 angedeuteten Spiegelkopfgehäuse in Azimut und Elevation schwenkbar angeordnet ist. Der Hauptspiegel 12 ist vorzugsweise raumstabilisiert und kann vom Richtschützen in Azimut und Elevation manuell verstellt werden, wodurch die durch ein Ausblickfenster 14 im Spiegelkopfgehäuse 13 hindurchgeführte Sichtlinie oder Sichtlinie 10 einem sich bewegenden Ziel nachgeführt werden kann.

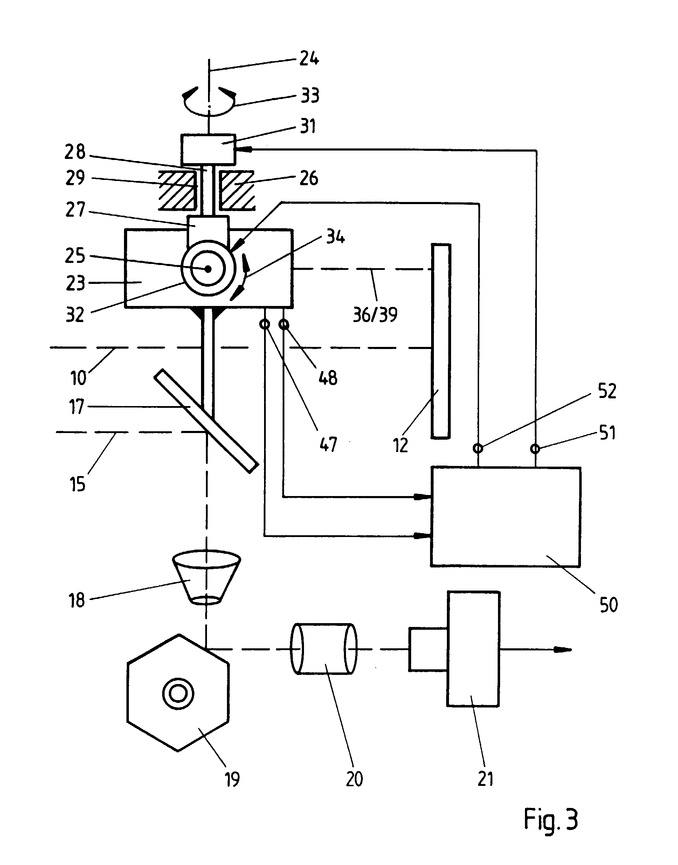

Mit 15 ist die Sichtlinie oder Sichtachse eines zusätzlichen Sichtsystems, nämlich eines Nachtsichtsystems oder Infrarotsensors, bezeichnet, das in einem Sensorkopf 16 untergebracht ist. Die einzelnen optischen und elektronischen Bauelemente des Infrarotsensors (IR-Sensor) sind in Fig. 3 schematisch dargestellt. Der IR-Sensor enthält einen Ausblick-Zusatzspiegel 17, der die optische Achse des IR-Sensors bzw. die Sichtlinie 15 um 90° umlenkt, ein IR-Objektiv 18, einen Scanner 19, ein Bildobjektiv 20 und ein Wärmebildgerät 21. Das vom Wärmebildgerät 21 generierte Infrarotbild wird auf einem Monitor 22 (Fig. 1) dargestellt. Alle Bauelemente des IR-Sensors, auch Infrarotkamera genannt, sind in fester Ausrichtung zueinander im Sensorkopf 16 angeordnet.

Die beiden Sichtlinien 10, 15 sind parallel zueinander ausgerichtet und durch eine nachfolgend beschriebene Vorrichtung so zwangsgekoppelt, daß die Sichtlinie 15 des optischen Zusatzsystems (IR-Sensor) der durch die Verstellung des Hauptspiegels 12 sich bewegenden Sichtlinie 10 des optischen Hauptsystems (Tagsichtsystem) hochgenau nachgeführt wird, so daß in jeder Stellung des Hauptspiegels 12 die beiden Sichtlinien 10, 15 immer parallel zueinander ausgerichtet sind. Die Vorrichtung weist einen optischen Positionssensor 23 auf, der starr mit dem Sensorkopf 16 verbunden ist. Die Baueinheit aus Positionssensor 23 und Sensorkopf 16 ist sowohl um eine Hochachse 24 als auch um eine Querachse 25 schwenkbar auf einer Plattform 26 gehalten. Hierzu ist der Sensorkopf 16 über mit der Querachse 25 fluchtenden Lagerzapfen (hier nicht zu sehen) in einem Bügel 27 schwenkbar angeordnet, der seinerseits mit einer Lagerwelle 28, die mit der Hochachse 24 fluchtet, in einem Lager 29 in der Plattform 26 drehbar angeordnet ist. An der Lagerwelle 28 greift - ggf. über ein Getriebe - die Abtriebswelle eines Servomotors 31 an, während einer der im Bügel 27 gehaltenen Lagerzapfen mit der Abtriebswelle eines zweiten Servomotors 32 gekoppelt ist. Die Baueinheit aus Sensorkopf 16 und Positionssensor 23 wird mittels des ersten Servomotors 31 in Azimut und mittels des zweiten Servomotors 32 in Elevation geschwenkt, wie dies durch die Pfeile 33 und 34 in Fig. 1 angedeutet ist.

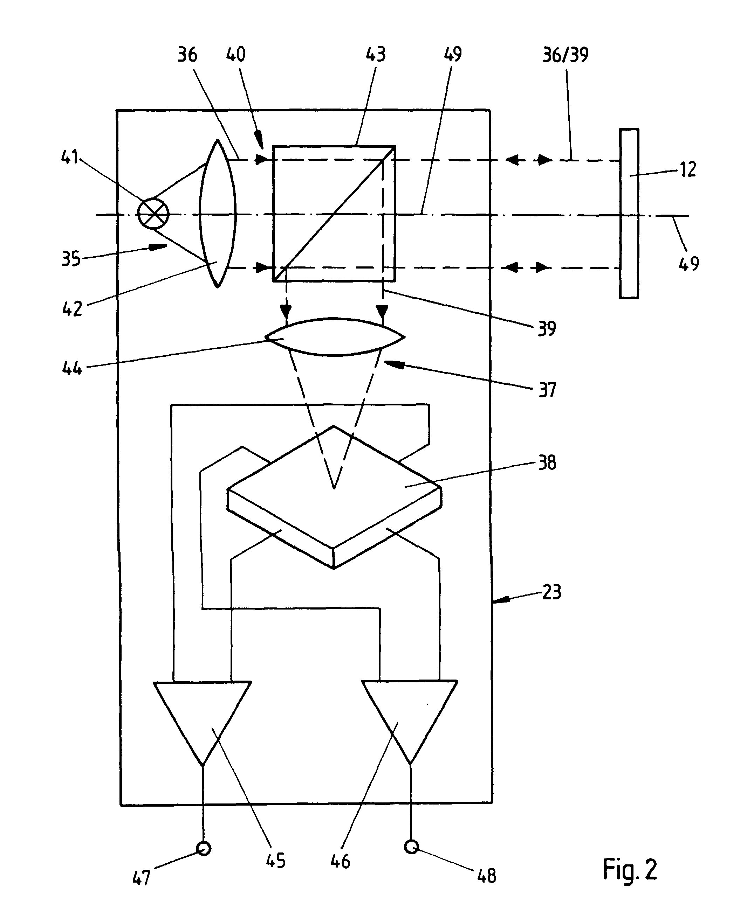

Der Positionssensor 23, der in Fig. 2 im einzelnen dargestellt ist, weist einen optischen Sender 35, der einen Lichtstrahl 36 aussendet, einen optischen Empfänger 37 zum Empfang des nach Reflexion als Reflexionsstrahl 39 zurückkehrenden Lichtstrahls 36 und einen Lichtdetektor 38 auf, auf den der optische Empfänger 37 den Reflexionsstrahl 39 abbildet. Der optische Sender 35 ist so justiert, daß der Lichtstrahl 36 lotrecht auf den Hauptspiegel 12 auftrifft und der vom Hauptspiegel 12 nach Reflexion zurückkehrende Reflexionsstrahl 39 im Zentrum des Lichtdetektors 38 auftrifft. Der Lichtdetektor 38 ist so ausgebildet, daß er Fehlersignale generiert, wenn der Reflexionsstrahl 39 sich aus dem Detektorzentrum verschiebt. Als Lichtdetektor 38 kann ein an sich bekannter Position Sensitive Sensor (PSS), eine CCD-Matrix oder ein Vierquadranten-Detektor verwendet werden. Letzterer ist beispielsweise in der US-PS 3 446 980 beschrieben. Der optische Sender 35 und der optische Empfänger 37 werden mittels eines Kollimators 40 realisiert, der eine Lichtquelle 41, eine Kollimatorlinse 42, einen Strahlenteiler 43, die längs der optischen Achse 49 des Kollimators 40 aufeinanderfolgend angeordnet sind, und ein Fokussierobjektiv 44 umfaßt. Der Kollimator 40 ist so justiert, daß seine optische Achse 40 senkrecht zur Spiegelfläche des Hauptspiegels 12 ausgerichtet ist. Das von der Lichtquelle 41 abgestrahlte, in der Kollimatorlinse 42 gebündelte Licht wird damit über den Strahlenteiler 43 als Lichtstrahl 36 lotrecht auf den Hauptspiegel 12 geworfen. Der zurückkehrende Reflexionsstrahl 39 wird vom Strahlenteiler 43 um 90° umgelenkt und durch das Fokussierobjektiv 44 als Lichtpunkt im Zentrum des Lichtdetektors 38 abgebildet. Die vom Lichtdetektor 38 erzeugten Fehlersignale liegen nach Verstärkung durch die Verstärker 45 und 46 als Fehlerspannungen an den Ausgängen 47 und 48 des Positionssensors 23 an.

Wie aus Fig. 1 hervorgeht, ist an den Ausgängen 47, 48 des Positionssensors 23 ein Positionsregler 50 angeschlossen, der über einen ersten Ausgang 51 den ersten Servomotor 31 und über einen zweiten Ausgang 52 den zweiten Servomotor 32 ansteuert. Treten Fehlersignale an den Ausgängen 47 und 48 des Positionssensors 23 auf, so generiert der Positionsregler 50 in Abhängigkeit von diesen Fehlersignalen Steuersignale für die Servomotoren 31, 32, in einer solchen Größe, daß die Servomotoren 31, 32 die Baueinheit aus Positionssensor 23 und Sensorkopf 16 in Elevation und in Azimut so verstellen, bis die Fehlersignale kompensiert, d. h. bis auf einen Restfehler zu "Null" gemacht worden sind.

Wird von dem Richtschützen, der über das Teleskop 11 ein Ziel anvisiert, der Hauptspiegel 12 in Elevation (Pfeil 53 in Fig. 1) oder in Azimut (Pfeil 54 in Fig. 1) verschwenkt, so fällt der vom Positionssensor 23 ausgehende Lichtstrahl 36 nicht mehr lotrecht auf den Hauptspiegel 12. Der vom Hauptspiegel 12 zurückkehrende Reflexionsstrahl 39 verschiebt sich dadurch aus dem Detektorzentrum des Lichtdetektors 38 und letzterer erzeugt entsprechende Fehlersignale, die den Positionsregler 50 zugeführt werden. Wie vorstehend gesagt, generiert der Positionssensor 50 entsprechende Steuersignale, so daß die Servomotoren 31, 32 den Positionssensor 23, damit den Sensorkopf 16 und damit die Sichtlinie 15 des IR-Sensors, so lange verschwenken, bis die Fehlersignale kompensiert sind. Die Fehlersignale verschwinden dann, wenn der Reflexionsstrahl 39 wieder im Zentrum des Lichtdetektors 38 auftrifft, was bedeutet, daß der Lichtstrahl 36 wiederum lotrecht auf dem Hauptspiegel 12 steht. Da bei lotrechtem Auftreffen des Lichtstrahls 36 auf dem Hauptspiegel 12 die Sichtlinien 10 und 15 parallel zueinander ausgerichtet sind, ist in jeder Schwenkstellung des Hauptspiegels 12 die Parallelität der Sichtlinien 10 und 15 gegeben.

In Fig. 3 ist die beschriebene Vorrichtung zur Zwangskopplung der Sichtlinien 10 und 15 von optischem Hauptsystem und optischem Zusatzsystem insofern modifiziert, als der Positionssensor 23 nicht mit dem gesamten Sensorkopf 16 des IR-Sensors fest verbunden ist, sondern ausschließlich mit dem Ausblick-Zusatzspiegel 17 des IR-Sensors. Der im übrigen hier nicht dargestellte Sensorkopf 16 ist mit seinen optischen und elektronischen Bauelementen 18 bis 21 fest auf der Plattform 26 angeordnet. Der Positionssensor 23 ist wiederum mittels der Servomotore 31 und 32 um die Hochachse 24 und um die Querachse 25 schwenkbar, wobei an den Schwenkbewegungen des Positionssensors 23 ausschließlich der Zusatzspiegel 17 teilnimmt. Im übrigen ist der Aufbau und die Wirkungsweise der Vorrichtung zur Zwangskopplung der beiden Sichtlinien 10 und 15 sowie die der beschriebenen Sichtsysteme identisch mit Fig. 1, so daß gleiche Elemente mit gleichen Bezugszeichen versehen sind. Von dem Tagsichtsystem ist in Fig. 3 lediglich der Hauptspiegel 12 und nur in prinzipieller Zuordnung zum Positionssensor 23 dargestellt.

## Patentansprüche

1. Vorrichtung zur Zwangskopplung zweier Sichtlinien (10, 15) in einem optischen Sichtsystem bestehend aus einem optischen Hauptsystem und einem optischen Zusatzsystem in der Weise, daß die Sichtlinie (15) des optischen Zusatzsystems der sich bewegenden Sichtlinie des optischen Hauptsystems in fest vorgegebener Zuordnung nachgeführt wird, wobei die Sichtlinie (10) des Hauptsystems über einen in Azimut und Elevation steuerbaren, insbesondere stabilisierten, Ausblick-Hauptspiegel (12) geführt ist, dadurch gekennzeichnet, daß die Sichtlinie (15) des Zusatzsystems an einen von Servomotoren (31, 32) in Azimut und Elevation verstellbaren optischen Positionssensor (23) starr angekoppelt ist, daß der Positionssensor (23) eine Lichtquelle (41) und einen Lichtdetektor (38) aufweist und so justiert ist, daß ein von der Lichtquelle (41) ausgehender Lichtstrahl (36) lotrecht auf den Hauptspiegel (12) fällt und der vom Hauptspiegel (12) nach Reflexion zurückkehrende Reflexionsstrahl (39) im Zentrum des Lichtdetektors (38) auftrifft, daß der Lichtdetektor (38) in an sich bekannter Weise so ausgebildet ist, daß er Fehlersignale generiert, wenn der Reflexionsstrahl (39) sich aus dem Detektorzentrum verschiebt, und daß mit dem Ausgang (47, 48) des Lichtdetektors (38) ein Positionsregler (50) verbunden ist, der die Servomotoren (31, 32) so steuert, daß die Fehlersignale kompensiert werden.

2. Vorrichtung nach Anspruch 1, dadurch gekennzeichnet, daß das Zusatzsystem in einem Zusatzkopf (16) fest integriert ist und Zusatzkopf (16) und Positionssensor (23) starr miteinander verbunden sind.

3. Vorrichtung nach Anspruch 1, dadurch gekennzeichnet, daß die Sichtlinie (15) des Zusatzsystems über einen Ausblick-Zusatzspiegel (17) geführt ist, der starr mit dem Positionssensor (23) verbunden ist.

4. Vorrichtung nach einem der Ansprüche 1 bis 3, dadurch gekennzeichnet, daß die Sichtlinien (10, 15) von Haupt- und Zusatzsystem parallel zueinander ausgerichtet sind

5. Vorrichtung nach einem der Ansprüche 1 bis 4, dadurch gekennzeichnet, daß der Positionssensor (23) einen Kollimator (40) mit einer Lichtquelle (41) und einem Strahlenteiler (43) aufweist, der den von der Lichtquelle (41) ausgehenden, von einer Kollimatorlinse (42) gebündelten Lichtstrahl (36) ungehindert zum Hauptspiegel (12) hindurchtreten läßt und den zurückkehrenden Reflexionsstrahl (39) aus dem Strahlengang hin zum Lichtdetektor (38) umlenkt, und daß die optische Achse (49) des Kollimators (40) lotrecht zur Spiegelfläche des Hauptspiegels (12) ausgerichtet ist.

6. Vorrichtung nach einem der Ansprüche 1 bis 5, dadurch gekennzeichnet, daß als Lichtdetektor (38) ein an sich bekannter Position Sensitive Sensor (PSS), eine CCD-Matrix oder ein Vierquadranten-Detektor verwendet wird.

7. Vorrichtung nach einem der Ansprüche 1 bis 6, dadurch gekennzeichnet, daß im Hauptsystem ein Teleskop (11) oder Periskop und im Zusatzsystem eine Infrarotkamera vorgesehen ist.

## Claims

1. Device for the forced coupling of two lines of sight (10, 15) in an optical system, comprising a main optical system and an auxiliary optical system, such that the line of sight (15) of the auxiliary optical system tracks the moving line of sight of the main optical system so that they are associated in a strictly predetermined manner, while the line of sight (10) of the main system is guided via a particularly stabilized main head mirror (12) controllable in terms of azimuth and elevation, identified by the fact that the line of sight (15) of the auxiliary system is coupled in a fixed manner to an optical position sensor (23) which can be adjusted by servo motors in terms of azimuth and elevation, that the position sensor (23) comprises a light source (41) and a light detector (38) and is adjusted so that a light beam (36) emitted from the light source (41) impinges perpendicularly onto the main mirror (12) and the reflected beam (39) returned by the main mirror (12) impinges on the center of the light detector (38), that the light detector is designed in an actually known manner so that it generates error signals if the reflected beam (39) is displaced with regard to the center of the detector, and that a position controller (50) which controls the servo motors (31, 32) so that the error signals are compensated is connected to the output (47, 48) of the light detector.

2. Device as per claim 1, identified by the fact that the auxiliary system is firmly integrated in a supplementary head (16) and that supplementary head (16) and position sensor (23) are coupled in a fixed manner.

3. Device as per claim 1, identified by the fact that the line of sight (15) of the auxiliary system is guided via an auxiliary head mirror (17) connected in a fixed manner to the position sensor (23).

4. Device as per one of the claims 1 to 3, identified by the fact that the lines of sight (10, 15) of the main and the auxiliary system are aligned in parallel.

5. Device as per one of the claims 1 to 4, identified by the fact that the position sensor (23) comprises a collimator (40) with a light source (41) and a beam splitter (43) permitting the light beam (36), concentrated by a collimator lens (42) and emitted from the light source (41), to freely pass to the main mirror (12) and deflecting the returning reflected beam (39) from the ray path towards the light detector (38), and that the optical axis (49) of the collimator (40) is aligned perpendicularly to the mirror surface of the main mirror (12).

6. Device as per one of the claims 1 to 5, identified by the fact that an actually known position sensitive sensor (PSS), a CCD matrix or a fourquadrant detector are used as a light detector (38).

7. Device as per one of the claims 1 to 6, identified by the fact that a telescope (11) or a periscope are provided in the main system and that an infrared camera is provided in the auxiliary system.

## Revendications

1. Dispositif destiné au couplage forcé de deux lignes de visée (10, 15) dans un système de visée optique comprenant un système optique principal et un système optique auxiliaire, de telle sorte que la ligne de visée (15) du système optique auxiliaire est asservie, suivant une définition préétablie, à la ligne de visée en mouvement du système optique principal, la ligne de visée (10) du système optique principal étant guidée par un miroir d'objectif principal (12) réglable en azimut et élévation et notamment stabilisé, caractérisé en ce que la ligne de visée (15) du système auxiliaire est couplée de façon rigide à un capteur de position optique (23) réglable en azimut et élévation au moyen de servomoteurs (31, 32), que le capteur de position (23) dispose d'une source de lumière (41) et d'un détecteur de lumière (38) et est réglé de telle façon qu'un rayon lumineux (36) émis par la source de lumière (41) est dirigé perpendiculairement vers le miroir principal (12) et que le rayon réfléchi (39) par le miroir principal (12) atteint le centre du détecteur de lumière (38), que la conception, elle-même connue, du détecteur de lumière (38) est telle que celui-ci génère des signaux d'erreur si le rayon réfléchi (39) s'écarte du centre du détecteur, et qu'un contrôleur de position (50) est lié à la sortie (47, 48) du détecteur de lumière (38) et commande les servomoteurs (31, 32) de façon à compenser les signaux d'erreur.

2. Dispositif suivant la revendication 1, caractérisé en ce que le système auxiliaire est intégré de manière solidaire dans une tête auxiliaire (16) et que la tête auxiliare (16) et le capteur de position (23) sont interconnectés de manière rigide.

3. Dispositif suivant la revendication 1, caractérisé en ce que la ligne de visée (15) du système auxiliaire est guidée par un miroir d'objectif auxiliaire (17), lié lui-même de manière rigide au capteur de position (23).

4. Dispositif suivant l'une quelconque des revendications 1 à 3, caractérisé en ce que les lignes de visée (10, 15) des systèmes principal et auxiliaire sont parallèles l'une par rapport à l'autre.

5. Dispositif suivant l'une des revendications 1 à 4, caractérisé en ce que le capteur de position (23) comprend un collimateur (40) avec une source de lumière (41) et un séparateur de faisceaux (43) qui assure la pénétration sans obstacle du rayon lumineux (36) émis par la source de lumière (41) et focalisé par une lentille collimatrice (42) vers le miroir principal (12) et le coudage du faisceau réfléchi (39) du trajet lumineux vers le détecteur de lumière (38), et que l'axe optique (49) du collimateur (40) est perpendiculaire à la surface du miroir principal (12).

6. Dispositif suivant l'une quelconque des revendications 1 à 5, caractérisé en ce qu'un Position Sensitive Sensor (PSS) déjà connu, une matrice CCD ou un détecteur quatre-cadrans est utilisé comme détecteur de lumière (38).

7. Dispositif suivant l'une quelconque des revendications 1 à 6, caractérisé en ce que le système principal dispose d'un téléscope (11) ou d'un périscope et le système auxiliaire d'une caméra infra-rouge.
